# EUROPÄISCHE PATENTSCHRIFT

(11) **EP 0 987 144 B1**
(45) Veröffentlichungstag und Bekanntmachung des Hinweises auf die Patenterteilung: **27.10.2004**
(21) Anmeldenummer: 99106850.3
(22) Anmeldetag: 07.04.1999
(51) Int. Cl.: B60R 1/00

(54) **Videorückwärtsfahrsystem**
Reverse driving with videosystem
Conduite en marche arrière avec système video

(30) Priorität: 14.09.1998 DE 19841915
(43) Veröffentlichungstag der Anmeldung: 22.03.2000
(73) Patentinhaber: ROBERT BOSCH GMBH, 70442 Stuttgart (DE)
(72) Erfinder: Lohner, Herbert, 71292 Friolzheim (DE); Dominike, Peter, 74321 Bietigheim-Bissingen (DE); Cao, Chi-Thuan, 70825 Korntal-Muenchingen (DE); Leimbach, Klaus-Dieter, 71696 Möglingen (DE); Harter, Werner, 75428 Illingen (DE); Hommel, Mathias, 70825 Korntal (DE)

(56) Entgegenhaltungen:
- EP-A- 0 830 985
- WO-A-96/38319
- US-A- 5 574 443
- PATENT ABSTRACTS OF JAPAN vol. 1996, no. 12, 26. Dezember 1996 (1996-12-26) & JP 08 207661 A (AICHI CORP), 13. August 1996 (1996-08-13)
- PATENT ABSTRACTS OF JAPAN vol. 1997, no. 06, 30. Juni 1997 (1997-06-30) & JP 09 037235 A (MATSUSHITA ELECTRIC IND CO LTD), 7. Februar 1997 (1997-02-07)
- PATENT ABSTRACTS OF JAPAN vol. 1997, no. 01, 31. Januar 1997 (1997-01-31) & JP 08 248484 A (NISSAN MOTOR CO LTD), 27. September 1996 (1996-09-27)

## Beschreibung

### Stand der Technik

Die Erfindung geht aus von einem elektronisch unterstützten Rückwärtsfahrsystem für Kraftfahrzeuge mit einer eine rückwärtige Fahrtstrecke aufnehmenden Rückwärtskamera und einem Display zur Anzeige eines von der Rückwärtskamera aufgenommenen Bildes.

Zur Unterstützung eines ein Fahrzeug rückwärts fahrenden Fahrers gibt es bereits mit einer Videokamera an der Rückseite ausgerüstete Fahrzeuge, die dem Fahrer auf einem Display ein Bild einer rückwärtigen Fahrstrecke anzeigen. Das Bild erscheint dabei auf dem Display seitenvertauscht und kann dadurch den Fahrer beim Rückwärtsfahren verwirren, da er bei normaler Rückwärtsfahrt gewohnt ist, die Augen nach hinten zu wenden.

JP 08 207661 (Oberbegriff von Anspruch 1) beschreibt eine Vorrichtung zur Beobachtung des rückwärtigen Bereichs eines Kraftfahrzeuges, wobei ein Bild dieses rückwärtigen Bereichs auf einem Monitor seitenverkehrt angezeigt wird.

### Aufgaben und Vorteile der Erfindung

Es ist Aufgabe der Erfindung ein elektronisch unterstütztes Rückwärtsfahrsystem, das keine Kopfdrehung nach hinten mehr erforderlich macht, so zu ermöglichen, daß der Fahrer, wenn er sich auf das am Display angezeigte Bild bezieht, das Lenkrad in die gleiche Richtung wie bei Vorwärtsfahrt dreht.

Die Aufgabe wird durch den unabhängigen Patentanspruch 1 gelöst.

Dadurch, daß eine elektronische Verarbeitungseinheit vorgesehen ist, die die an dem Display anzuzeigenden Bilder elektronisch so an einer vertikalen Achse spiegelt, daß am Display die rückwärtige Fahrtstrecke seitenverkehrt erscheint, kann eine Rechtskurve in der rückwärtigen Fahrtstrecke auf dem Display als Linkskurve und eine Linkskurve als Rechtskurve dargestellt werden. Wenn der Fahrer das Display betrachtet, kann er beim Rückwärtsfahren das Lenkrad bei einer Rechtskurve nach links einschlagen und bei einer Linkskurve nach rechts, wie er es jeweils bei Vorwärtsfahrt gewohnt ist. Er braucht somit seine Lenkbewegungen nicht mehr seitenverkehrt auszuführen.

Bevorzugt ist das Display im Armaturenbrett des Fahrzeugs eingebaut.

Die vertikale Spiegelachse kann z.B. am rechten Bildrand liegen oder auch vom Fahrer wählbar eingestellt werden.

Die elektronische Verarbeitungseinheit ist mit einer Bildauswertungseinheit kombiniert, die eine Auswertung der von der Rückwärtskamera aufgenommenen Bilder ausführt, so daß die rückwärtige Fahrspur überwacht und Hindernisse auf der Fahrspur erkannt werden. Dem Fahrer wird ein akustisches und/oder optisches Warnsignal gegeben, wenn er die Fahrspur verläßt oder sich ein Hindernis auf der Fahrspur befindet.

Ebenfalls ist die Rückwärtskamera mit einer ZoomEinrichtung ausgerüstet, und die Verarbeitungs und Bildauswertungseinheit weist Mittel auf, mit denen der Fahrer einen Vergrößerungsfaktor des am Display dargestellten Bildes wählen kann.

Ferner kann das elektronisch unterstützte Rückwärtsfahrsystem funktionell mit weiteren Systemen im Fahrzeug verbunden sein, z.B. mit einer Motorsteuerung, Bremsensteuerung, Getriebeautomatik, so daß zusätzlich zu der Warnmeldung beim Auftauchen eines Hindernisses in der Rückwärtsfahrspur das Fahrzeug selbsttätig angehalten werden kann.

Weitere Merkmale und Aufgaben des erfindungsgemäßen elektronisch unterstützten Rückwärtsfahrsystems werden nachstehend anhand der eine bevorzugte Ausführungsform darstellenden Zeichnung beschrieben.

### Zeichnung

Es zeigen
Fig. 1a schematisch die rückwärtige Fahrstrecke und das von der Rückwärtskamera aufgenommene und am Display angezeigte Bild der Fahrstrecke ohne Achsenspiegelung des von der Rückwärtskamera aufgenommenen und am Display angezeigten Bildes;
Fig. 1b dieselben Verhältnisse nach einer elektronisch ausgeführten Achsenspiegelung;
Fig. 2 ein Blockschaltbild des elektronisch unterstützten Rückwärtsfahrsystems in einer bevorzugten Ausführungsform.

### Ausführungsbeispiele

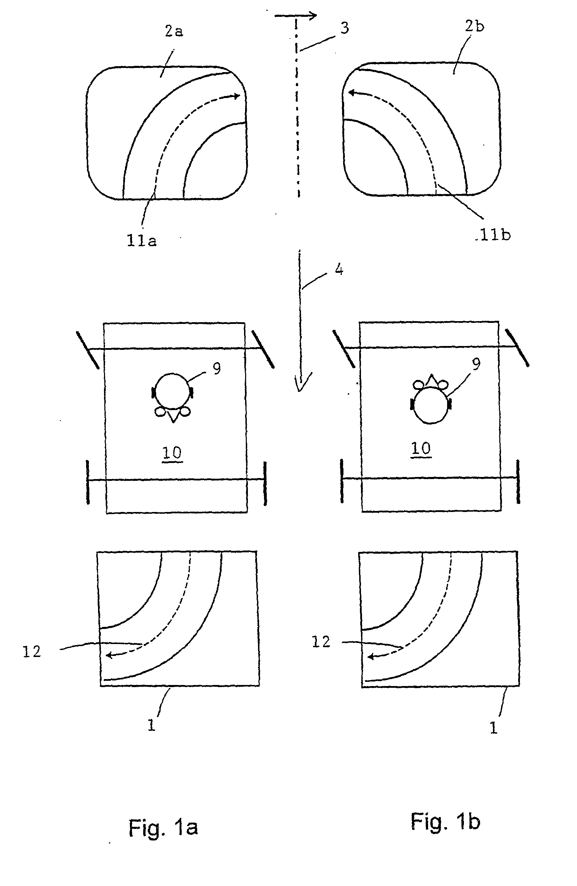

Zunächst veranschaulichen die Figuren 1a und 1b jeweils ein beim Rückwärtsfahren (Pfeil 4) eines schematisch angedeuteten Kraftfahrzeugs 10 auftretendes Problem, und die mit dem erfindungsgemäßen Rückwärtsfahrsystem erreichte Lösung. Es ist allgemein bekannt, daß ein Fahrer, symbolisiert durch den Fahrerkopf 9 beim Rückwärtsfahren durch eine Rechtskurve 12, wie er sie durch das Rückfenster 1 erblickt, das (nicht gezeigte) Lenkrad des Kraftfahrzeugs 10 nach links einschlagen muß, so daß die Räder die in der Fig. 1a und 1b gezeigte Stellung einnehmen.

Eine an der Rückseite des Kraftfahrzeugs 10 angebrachte (in Fig. 1a, 1b nicht gezeigte) Rückwärtskamera würde dann auf einem Display 2a ein Bild 11a erzeugen. Wenn der Fahrer 9 beim Rückwärtsfahren vorwärts auf das Display schaut, könnte er durch die darauf dargestellte Rechtskurve 11a irritiert werden und die Räder in die falsche Richtung einschlagen.

Deshalb ist gemäß einem wesentlichen Aspekt der Erfindung das Rückwärtsfahrsystem mit einer elektronischen Verarbeitungseinheit ausgestattet, welche die von der Rückwärtskamera erzeugten Bildsignale an einer senkrechten Achse 3 spiegelt, so daß das Display 2b die in Rückwärtsrichtung 4 gefahrene Kurve 12 als Linkskurve 11b, d.h. seitenverkehrt, anzeigt (Fig. 1b). Somit wird bei dem erfindungsgemäßen Rückwärtsfahrsystem eine Rechtskurve 12 der rückwärtigen Fahrstrecke auf dem Display 2b als Linkskurve und umgekehrt eine in der rückwärtigen Fahrstrecke gefahrene Linkskurve auf dem Display als Rechtskurve dargestellt.

Wenn der Fahrer das Display betrachtet, kann er somit das Lenkrad in der Richtung der am Display jeweils angezeigten Fahrkurve einschlagen, wie er es bei einer Vorwärtsfahrt gewohnt ist. D.h., daß der Fahrer 9 seine Lenkbewegung bezogen auf das Display 2b nicht mehr seitenverkehrt ausführen muß.

Mit dem erfindungsgemäßen Rückwärtsfahrsystem ist deshalb nicht nur die Kopfdrehung nach hinten entbehrlich, sondern die Lenkbewegungen werden erleichtert, da sie nicht, wie sonst, seitenverkehrt ausgeführt werden müssen. Bezogen auf das Display kann jetzt das Lenkrad in die gleiche Richtung wie bei Vorwärtsfahrt gedreht werden.

Somit ist das System besonders geeignet für Kraftfahrzeuge, die keine befriedigende Rundumsicht nach hinten ermöglichen, für schwierige Hofeinfahrten und für Zielgruppen mit körperlichen Handicaps.

Wie erwähnt, kann das Display im Armaturenbrett des Fahrzeugs eingebaut sein, so daß der Fahrer eine bequeme Sicht darauf hat.

Wie in den Figuren 1a und 1b angedeutet, kann die senkrechte Spiegelachse 3 am rechten Bildrand des von der Rückwärtskamera aufgenommenen Bildes liegen. Alternativ kann die elektronische Verarbeitungseinheit so eingerichtet sein, daß der Fahrer die Spiegelachse selbst wählen kann.

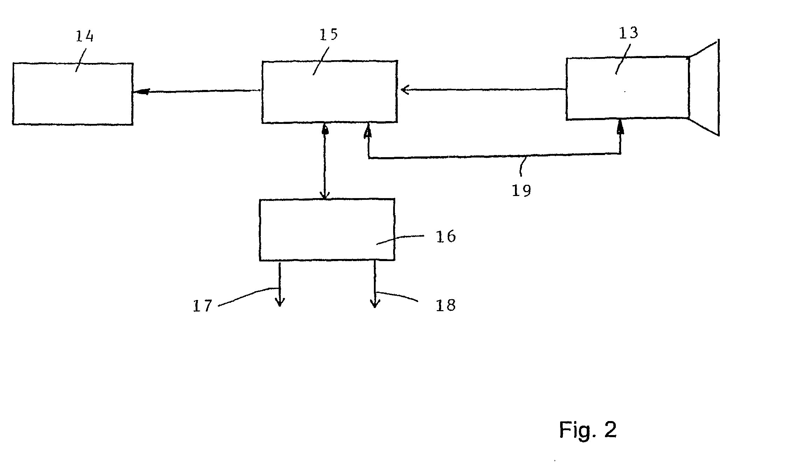

Die Fig. 2 zeigt blockschaltbildartig ein erfindungsgemäßes elektronisch unterstütztes Rückwärtsfahrsystem, bei dem eine Rückwärtskamera 13, z.B. eine Farbvideokamera, über eine elektronische Verarbeitungseinheit 15 zur Bildbearbeitung mit einem Display 14 verbunden ist. Die elektronische Verarbeitungseinheit führt in der Grundausführung zumindest die oben erwähnte Achsenspiegelung des von der Rückwärtskamera 13 aufgenommenen Bildes der rückwärtigen Fahrtstrecke aus.

Weiterhin ist die elektronische Verarbeitungseinheit 15 bei dem in Fig. 2 gezeigten Ausführungsbeispiel funktionell mit einer Bildauswertungseinheit 16 verbunden, die anhand der von der Rückwärtskamera 4 erzeugten Bildsignale die rückwärtige Fahrspur überwacht und erkennt, ob der Fahrer die Fahrspur verläßt oder ob sich ein Hindernis auf der Fahrspur befindet. In diesem Fall, wenn z.B. ein Hindernis auf der Fahrspur ist, erzeugt die Bildauswertungseinheit 16 ein akustisches und/oder optisches Warnsignal 17.

Wie erwähnt, kann die Rückwärtskamera 13 eine Farbvideokamera sein. In diesem Fall ist die elektronische Verarbeitungs und Bildauswertungseinheit zur Verarbeitung und Auswertung von Farbvideosignalen eingerichtet. Dann kann ein optisches Warnsignal beim Auftreten eines Hindernisses in der rückwärtigen Fahrspur dadurch ausgegeben werden, daß das Display in dem angezeigten Bild das Hindernis farblich hervorhebt. Statt oder zusätzlich zu einer farbigen Hervorhebung kann die Verarbeitungseinheit 15 das Hindernis in dem auf dem Display 14 angezeigten Bild auch durch eine andere Anzeigetechnik kenntlich machen.

In einer weiteren Ausbaustufe kann die Videokamera 13 mit einer ZoomEinrichtung versehen sein, und die Verarbeitungs und Bildauswertungseinheit 15, 16 kann Mittel aufweisen, mit denen der Fahrer einen Vergrößerungsfaktor des mit der Rückwärtskamera 13 aufgenommenen und am Display 14 angezeigten Bildes wählen kann. Solche Vergrößerungsfaktorstellsignale 19 werden der Rückwärtskamera 13 von der elektronischen Verarbeitungseinheit 15 zugeführt.

In Fig. 2 ist das erfindungsgemäße Rückwärtsfahrsystem über eine Leitung 18 funktionell mit weiteren System im Kraftfahrzeug verbunden, wie z.B. mit der Motorsteuerung, der Bremsensteuerung, der Getriebeautomatik etc.. Damit kann zusätzlich zur Erzeugung von Warnmeldungen an den Fahrer das Fahrzeug beim Auftauchen eine Hindernisses in der Rückwärtsfahrspur selbsttätig angehalten werden.

Das erfindungsgemäße elektronisch unterstützte Rückwärtsfahrsystem unterstützt das Rückwärtsfahren eines Kraftfahrzeugs mit Hilfe einer Rückwärtskamera 13 und eines Displays 14 im Armaturenbrett. Das Bild der rückwärtigen Fahrstrecke wird dabei auf dem Display 14 bzw. 2b (Fig. 1b) durch eine Achsenspiegelung an einer vertikalen Achse 3 so dargestellt, daß die erforderlichen Lenkeingriffe des Fahrers bezogen auf das Display 14 wie beim Vorwärtsfahren durchgeführt werden, d.h. nicht seitenvertauscht, wie beim normalen Rückwärtsfahren.

Somit unterstützt das System das Rückwärtsfahren einmal dadurch, daß keine Kopfdrehung des Fahrers nach hinten mehr erforderlich ist, und andererseits, indem es die Lenkbewegungen erleichtert, da diese, wie bei Rückwärtsfahrt üblich, seitenverkehrt ausgeführt werden müssen. Bezogen auf das Display 14, kann jetzt das Lenkrad in die gleiche Richtung wie bei Vorwärtsfahrt gedreht werden. Ferner können in der weitergebildeten Ausführung Warnsignale beim Auftauchen eines Hindernisses an den Fahrer ausgegeben werden.

Somit ist das System besonders geeignet für Zielgruppen mit schwierigen Hofeinfahrten oder mit körperlichen Handicaps.

## Patentansprüche

1. Elektronisch unterstütztes Rückwärtsfahrsystem für Kraftfahrzeuge mit einer eine rückwärtige Fahrtstrecke aufnehmenden Rückwärtskamera (13) und einem Display (14) zur Anzeige eines von der Rückwärtskamera (13) aufgenommenen Bildes, wobei eine elektronische Verarbeitungseinheit (15) vorgesehen ist, die die an dem Display (14) anzuzeigenden Bildsignale elektronisch so an einer vertikalen Achse (3) spiegelt, daß am Display (14) die rückwärtige Fahrtstrecke (1) seitenverkehrt erscheint, **dadurch gekennzeichnet, daß**
- die elektronische Verarbeitungseinheit (15) ferner eine Bildauswertungseinheit (16) aufweist, die eine Auswertung des von der Rückwärtskamera (13) aufgenommenen Bildes ausführt, so daß Hindernisse auf der Fahrspur erkannt werden und an den Fahrer ein akustisches und/oder optisches Warnsignal (17) ausgegeben wird, wenn der Fahrer beim Rückwärtsfahren die Fahrspur verläßt oder sich ein Hindernis auf der Fahrspur befindet und
- die Rückwärtskamera (13) eine ZoomEinrichtung und die Verarbeitungs und Bildauswertungseinheit (15, 16) Mittel zur Einstellung des Zooms aufweist, und Mittel vorgesehen sind, mit denen der Fahrer einen Vergrößerungsfaktor des am Display (14) dargestellten Bildes wählen kann.

2. Rückwärtsfahrsystem nach Anspruch 1, **dadurch gekennzeichnet, daß** das Display (14) im Armaturenbrett des Fahrzeugs eingebaut ist.

3. Rückwärtsfahrsystem nach Anspruch 1, **dadurch gekennzeichnet, daß** die senkrechte Spiegelachse (3) am rechten Bildrand des von der Rückwärtskamera (13) aufgenommenen Bildes liegt.

4. Rückwärtsfahrsystem nach Anspruch 1, **dadurch gekennzeichnet, daß** die Lage der senkrechten Spiegelachse (3) vom Fahrer wählbar ist.

5. Rückwärtsfahrsystem nach einem der vorangehenden Ansprüche, **dadurch gekennzeichnet, daß** die Rückwärtskamera (13) eine Farbvideokamera ist, und die elektronische Verarbeitungs und Bildauswertungseinheit (15, 16) für die Verarbeitung/Auswertung von Farbvideosignale eingerichtet ist.

6. Rückwärtsfahrsystem nach Anspruch 1 oder 5, **dadurch gekennzeichnet, daß** die Verarbeitungs und Bildauswertungseinheit (15, 16) eine optische Hinderniswarnung durch Kennzeichnung oder farbliche Hervorhebung der auf der Fahrspur liegenden Hindernisse in dem am Display (14) angezeigten Bild erzeugt.

7. Rückwärtsfahrsystem nach einem der vorangehenden Ansprüche, **dadurch gekennzeichnet, daß** das elektronisch unterstützte Rückwärtsfahrsystem funktionell mit weiteren Systemen im Fahrzeug verbunden ist, wie z.B. mit der Motorsteuerung, Bremsensteuerung, Getriebeautomatik, um beim Auftauchen eines Hindernisses in der Rückwärtsfahrspur das Fahrzeug selbsttätig anzuhalten.

## Claims

1. Electronically assisted reversing system for motor vehicles, having a rearward-facing camera (13) which photographs a rearward section of travel, and a display (14) for displaying an image photographed by the rearward-facing camera (13), an electronic processing unit (15) being provided which mirrors the image signals, which are to be displayed on the display (14), electronically on a vertical axis (3) in such a manner that the rearward section of travel (1) appears laterally reversed on the display (14), **characterized in that**
- the electronic processing unit (15) furthermore has an image evaluation unit (16) which carries out an evaluation of the image photographed by the rearward-facing camera (13), with the result that obstacles in the traffic lane are identified and an acoustic and/or optical warning signal (17) is output to the driver if the driver leaves the traffic lane when reversing or if there is an obstacle in the traffic lane, and
- the rearward-facing camera (13) has a zoom device and the processing and image evaluation unit (15, 16) has means for setting the zoom, and means are provided with which the driver can select an enlargement ratio of the image depicted on the display (14).

2. Reversing system according to Claim 1,
**characterized in that** the display (14) is installed in the dashboard of the vehicle.

3. Reversing system according to Claim 1,
**characterized in that** the vertical mirror axis (3) is situated on the right edge of the image photoqraphed by the rearward-facing camera (13).

4. Reversing system according to Claim 1,
**characterized in that** the position of the vertical mirror axis (3) can be selected by the driver.

5. Reversing system according to one of the preceding claims, **characterized in that** the rearward-facing camera (13) is a colour video camera, and the electronic processing and image evaluation unit (15, 16) is set up for processing/evaluating colour video signals.

6. Reversing system according to Claim 1 or 5,
**characterized in that** the processing and image evaluation unit (15, 16) generates an optical obstacle warning by marking or emphasizing in colour the obstacles situated in the traffic lane in the image displayed on the display (14).

7. Reversing system according to one of the preceding claims, **characterized in that** the electronically assisted reversing system is functionally connected to further systems in the vehicle, for example to the engine controller, brake controller, automatic gear box, in order to automatically stop the vehicle when an obstacle appears in the rearward traffic lane.

## Revendications

1. Système de conduite en marche arrière avec assistance électronique pour des véhicules, comprenant une caméra (13) orientée vers l'arrière et qui effectue la prise de vue de la voie de circulation située en arrière, un écran (14) qui représente la vue prise par la caméra (13), ainsi qu'une unité électronique de traitement (15) qui réfléchit électroniquement par rapport à un axe vertical (3), les signaux d'image qui doivent apparaître sur l'écran (14), de manière que sur l'écran (14) apparaît la voie de circulation située en arrière avec inversion latérale,
**caractérisé en ce que**
- l'unité électronique de traitement (15) comprend de plus une unité d'exploitation d'image (16) qui effectue un traitement de l'image prise par la caméra arrière (13), de sorte que les obstacles existant sur la voie de circulation sont perçus et qu'un signal d'alerte (17) acoustique et/ou optique est adressé au conducteur, si celui-ci, en marche arrière, quitte la voie de circulation ou si sur celle-ci se trouve un obstacle,
- la caméra arrière comprend un dispositif de zoom et l'unité de traitement et d'exploitation d'image (15, 16), comporte des moyens de réglage du zoom, et il est prévu également des moyens par lesquels le conducteur peut choisir un facteur de grossissement de l'image apparaissant à l'écran (14).

2. Système de conduite en marche arrière selon la revendication 1,
**caractérisé en ce que**
l'écran (14) est incorporé au tableau de bord du véhicule.

3. Système de conduite en marche arrière selon la revendication 1,
**caractérisé en ce que**
l'axe vertical de réflexion (3) se trouve le long du bord droit de l'image prise par la caméra arrière (13).

4. Système de conduite en marche arrière selon la revendication 1,
**caractérisé en ce que**
la position de l'axe de réflexion vertical (3) peut être choisie par le conducteur.

5. Système de conduite en marche arrière selon une des revendications précédentes,
**caractérisé en ce que**
la caméra arrière (13) est une caméra vidéo en couleurs, et l'unité de traitement et d'exploitation d'image (15, 16) est conçue pour traiter/exploiter les signaux vidéo en couleurs.

6. Système de conduite en marche arrière selon la revendication 1 ou 5,
**caractérisé en ce que**
l'unité de traitement et d'exploitation d'image (15, 16) produit dans l'image apparaissant sur l'écran (14), un avertissement optique d'obstacle en caractérisant ou en faisant ressortir en couleurs des obstacles se trouvant sur la voie de circulation.

7. Système de conduite en marche arrière selon une des revendications précédentes,
**caractérisé en ce que**
le système de conduite en marche arrière avec assistance électronique est en liaison fonctionnelle avec d'autres systèmes du véhicule, comme par exemple la commande du moteur, la commande des freins, la transmission automatique, pour arrêter automatiquement le véhicule quand apparaît un obstacle sur la voie de circulation située en arrière.
